(19) **Europäisches Patentamt**

**European Patent Office**

**Office européen des brevets**

(11) **EP 1 056 293 A1**

(12) **EUROPEAN PATENT APPLICATION**

(43) Date of publication:
**29.11.2000 Bulletin 2000/48**

(51) Int. Cl.[7]: **H04N 7/26**

(21) Application number: **99110116.3**

(22) Date of filing: **25.05.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**DEUTSCHE THOMSON-BRANDT GMBH**
**78048 Villingen-Schwenningen (DE)**

(72) Inventors:
• **Keesen, werner**
  **30173 Hannover (DE)**
• **Gaedke, Klaus**
  **30163 Hannover (DE)**

(74) Representative:
**Hartnack, Wolfgang, Dipl.-Ing.**
**Deutsche Thomson-Brandt GmbH**
**European Patent Operations**
**Karl-Wiechert-Allee 74**
**30625 Hannover (DE)**

(54) **Method and apparatus for block motion estimation**

(57)     For block motion estimation the current frames are divided into blocks and the picture elements of each block are compared with the picture elements within a search area of a reference frame in order to determine a motion vector. According to the invention the processing requirements are reduced by parallel processing, wherein the search area (SA) is separated into search area stripes (St0, St1,...) with a width equal to the block width (n). The picture elements of k neighboring blocks $(A_0,..., A_{k-1})$ are compared with the picture elements of the search area stripes until the complete search area for a block has been processed. A block, for which the complete search area has been processed, is substituted by an unprocessed block. In an advantageous manner, the lines of the current frame are separated into block sections comprising k neighboring blocks, wherein the horizontal width of the block sections is equal to the horizontal width of the search area $(w_h)$.

**FIG. 1a**

**FIG. 1b**

EP 1 056 293 A1

**Description**

The invention relates to a method and an apparatus for block motion estimation, especially for MPEG2 encoder.

Prior art

For the compression of video sequences it is well known to make use of the high redundancy between successive frames. Especially the technique of block motion estimation is widely used, e.g. for encoding according to the MPEG2 Part 2: video standard as specified in ISO/IEC 13818-2.

In this technique, the current frames are divided spatially into rectangular or square blocks consisting of n x m picture elements (pixels, pels). Than, a search for each block of the current frame is performed. For this purpose, the picture elements of each block are compared with the picture elements of a block within a search area of a reference frame. A cost function, i.e. a measure of the match between the compared blocks, is calculated for all search positions. The actual motion vector is defined by the relative positions of the two blocks where the cost function has the minimum value.

Using the most common cost function, the mean of the absolute difference (mad) between current block and candidate block from the reference frame,

$$mad = \sum_{i=1}^{n} \sum_{j=1}^{m} |p_{i,j}(current) - p_{i,j}(candidate)|$$

about n x m subtractions, absolute value calculations and additions have to be performed for each search position.

For a 13.5 MHz video signal (horizontal resolution $W_{frame,h}$ = 720 pel, vertical resolution $W_{frame,v}$ = 576 pel, frame rate $f_{frame}$ = 25 Hz) and the following typical parameter set for the blockmatching process:

Horizontal search range     $s_h$ = +/- 64 pel
Vertical search range       $s_v$ = +/- 32 pel
Horizontal block size       n = 16 pel
Vertical block size         m = 16 pel

the required processing power exceeds 250 billion operations per second.

Techniques are known, where the processing power is reduced by using only a fraction of the picture elements in the macro blocks and search area, respectively. The use of Quincunx subsampling as such method is described for example in DE-A-19509418. However, the rate of subsampling is limited due to the necessary accuracy of the motion estimation.

Invention

The invention is based on the object of specifying a method for block motion estimation with reduced implementation requirements e.g. for real-time motion estimation. This object is achieved by means of the method specified in claim 1.

It is a further object of the invention to disclose an apparatus which utilises the inventive method. This object is achieved by the apparatus disclosed in claim 7.

The above calculated computational demand can be fulfilled for real-time motion estimation only by massive parallel processing of the cost function. If a parallel search on several independent search areas is performed, the required communication bandwidth between the memories storing the search areas and the arithmetic unit performing the cost function calculation would grow linear with the number of parallel processed searches. However, this is not true, if neighbouring blocks of the current frame are fed to several processing elements, wherein the processing elements perform the search for these blocks on a common search area.

In principle, the method for block motion estimation consists in the fact that

-     the search area is separated into search area stripes with a width equal to the width of the blocks;
-     the picture elements of k neighbouring blocks are compared with the picture elements of the search area stripes until the complete search area for a block has been processed;

- the block, for which the complete search area has been processed, is substituted by an unprocessed block.

In an advantageous manner, the lines of the current frame are separated into block sections comprising k neighbouring blocks which are processed in parallel, wherein the horizontal width of the block sections is equal to the horizontal width of the search area.

Also, it may be particularly advantageous if the search area stripes have a vertical width equal to the vertical width of the search area.

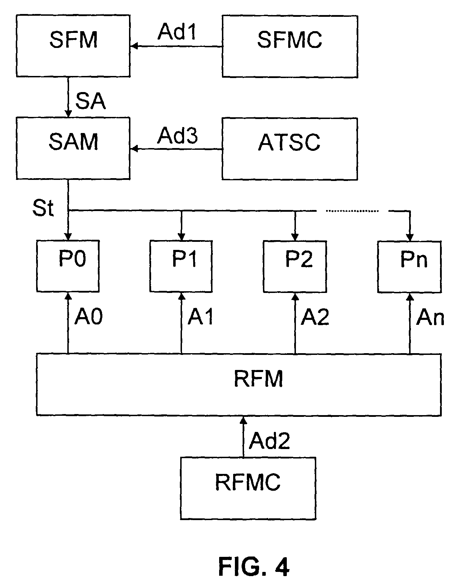

In an advantageous development the picture elements of the search area stripes are compared in parallel (Fig. 4) with the picture elements of the k neighbouring blocks.

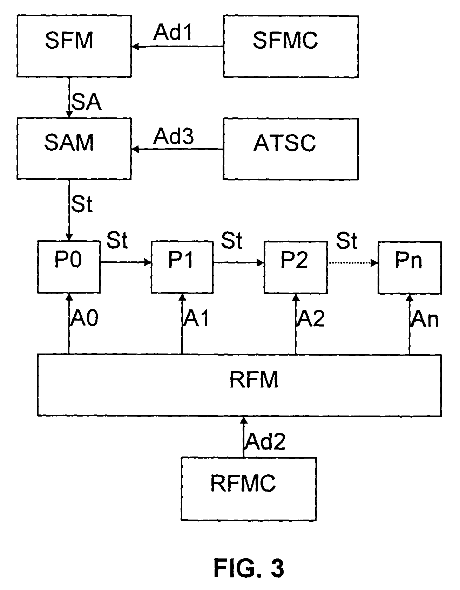

In a further advantageous development the picture elements of the search area stripes are compared in serial (Fig. 3) with the picture elements of the k neighbouring blocks.

Furthermore, it may be particularly advantageous if the block motion estimation is part of an MPEG encoding of video signals and the blocks are macroblocks with a horizontal and vertical macroblock size of 16 picture elements.

In principle, the apparatus for image motion estimation, includes:

- first means for controlling the conversion of the search area into search stripes;
- k processing elements which are loaded with k neighbouring blocks for comparing with the picture elements of the search area stripes;
- means for substituting a block, for which the complete search area has been processed by an unprocessed block.

In an advantageous manner, the apparatus further comprises:

- a search frame memory;
- a reference frame memory;
- second means for controlling the search frame memory;
- third means for controlling the reference frame memory;
- a search area memory, in which the current search area is loaded from the search frame memory.

In an advantageous development the processing elements are arranged in serial order.

In a further advantageous development the processing elements are arranged in parallel order.

Drawings

Exemplary embodiments of the invention are described with reference to the figures. These show in:

Figure 1      the division of a frame into macroblocks (a) and the overlapping search areas for neighbouring macroblocks (b);

Figure 2      a search scheme for parallel processing of k neighbouring macroblocks;

Figure 3      a block diagram for serial search stripe data flow;

Figure 4      a block diagram for parallel search stripe data flow.

Exemplary embodiments

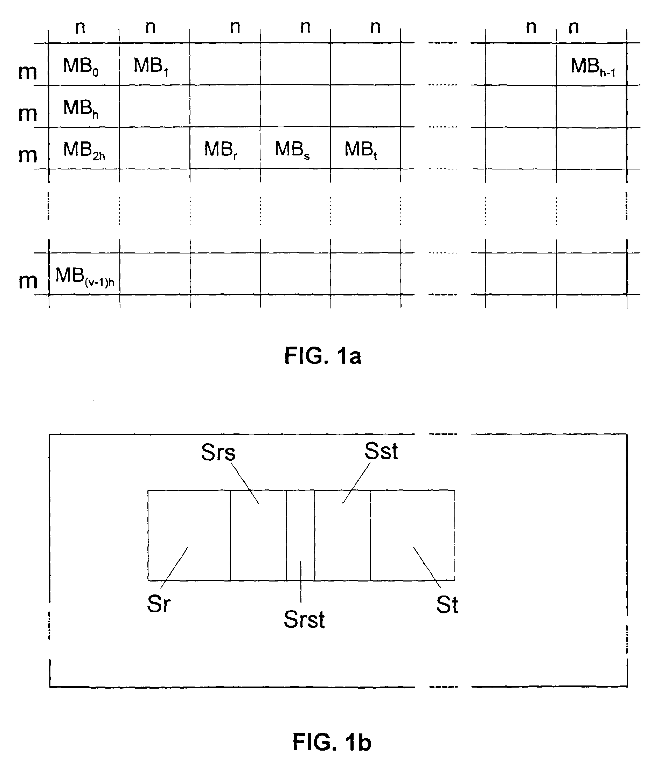

Figure 1a) illustrates the division of a current frame into h x v macroblocks $MB_0$, $MB_1$, $MB_{h-1}$, etc. with a horizontal macroblock size of n picture elements and a vertical macroblock size of m picture elements. Within the reference frame, which is also named search frame and can be a preceding or a following frame, a search area is assigned to each of the macroblocks. For an example of three neighboring macroblocks $MB_r$, $MB_s$, $MB_t$ the respective search areas overlap as shown in figure 1b). A first part $S_r$ of the search area of macroblock $MB_r$ is only used for macroblock $MB_r$, a second part $S_{rs}$ is also used for macroblock $MB_s$ and finally a third part $S_{rst}$ is used for macroblocks $MB_r$, $MB_s$, $MB_t$. The search area for macroblock $MB_s$ comprises besides the already mentioned parts $S_{rs}$ and $S_{rst}$ a further part $S_{st}$ which is also used for the macroblock $MB_s$ but not for $MB_r$. Similar besides parts $S_{rst}$ and $S_{st}$ a third part $S_t$ exists which is only used for the macroblock $MB_t$.

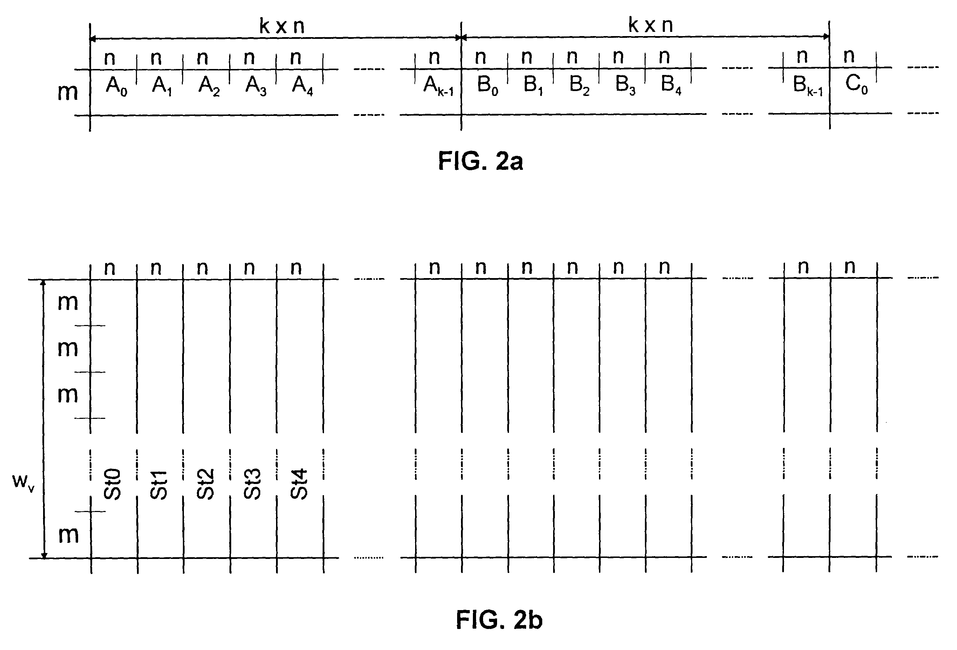

According to the invention the processing scheme of figure 2 can be applied. The macroblock lines of the current frame are separated into sections consisting of $k$ macroblocks $A_0$,..., $A_{k-1}$, $B_0$,..., $B_{k-1}$, $C_0$,... as shown in figure 2a). The value of $k$ depends on the search range width $s_h, s_v$ and the size n,m of the macroblocks as follows. First, $s_{h,max}$ and $s_{v,max}$ are defined to be the maximum absolute value of $s_h$ and $s_v$ respectively. The horizontal width $w_h$ of the search area and the vertical width $w_v$ of the search area are

$$w_h = (2 \cdot s_{h,\max}) + n \text{ and } w_v = (2 \cdot s_{v,\max}) + m$$

Now, $k$ can be calculated to

$$k = \frac{w_h}{n} = \frac{2 \cdot s_{h,\max}}{n} + 1 \qquad \text{or} \quad k = \frac{w_v}{m} = \frac{2 \cdot s_{v,\max}}{m} + 1$$

The reference frame is separated into search area stripes St0, St1,... with a horizontal width of $n$ and a vertical width of $w_v$. At the beginning of the processing of a macroblock line, the current macroblocks $A_0$ to $A_{k-1}$ are loaded into the $k$ processing elements. Subsequent, the search area stripes of the reference frame are piped through the processing elements. After processing of one stripe, new search stripes are generated which are shifted compared to the former search stripes by one picture element. These search area stripes are also piped through the processing elements and so on until the complete search area for macroblock $A_0$ has been processed and the minimum of the cost function can be calculated. Afterwards, macroblock $A_0$ is substituted by the first macroblock $B_0$ of the next macroblock section. Similar, when the processing of macroblock $A_1$ is finished, it is substituted by macroblock $B_1$ of the following section. This scheme is applied until the end of the macroblock line of the current frame.

The bandwidth requirement of the described processing scheme can be calculated as follows. With exception of the last search area stripe, the processing for one search area stripe requires $n \cdot w_v$ accesses to memory words consisting of $n$ pels. The processing of the last search area stripe requires $w_v$ accesses to memory words consisting of $n$ pels. The total number $n_{sas}$ of search area stripes is the horizontal resolution $w_{frame,h}$ of the current frame divided by the horizontal size $n$ of the macroblocks.

$$n_{sas} = \frac{w_{frame,h}}{n}$$

This totals to a number of accesses $n_{a,mbl}$ for the processing of one macroblock line:

$$n_{a,mbl} = (n \cdot w_v \cdot (n_{sas} - 1)) + w_v = w_v \cdot (n \cdot n_{sas} - n + 1)$$
$$= w_v \cdot (w_{frame,h} - n + 1)$$

The number of macroblock lines $n_{mbl,frame}$ within a frame can be calculated to

$$n_{mbl,frame} = \frac{w_{frame,v}}{m}$$

The total number of accesses $n_{a,frame}$ for one frame to the reference data memory is

$$n_{a,frame} = n_{a,mbl} \cdot n_{mbl,frame} = w_v \cdot (w_{frame,h} - n + 1) \cdot \frac{w_{frame,v}}{m} \qquad (\text{Equ. 1.5})$$

For the above used example with a horizontal resolution $w_{frame,h}$ = 720 pel, a vertical resolution $w_{frame,v}$ = 576 pel, a vertical search range $s_v$ = +/-32 pel, and $m$ = 16 for the vertical size of the macroblocks ($w_v$ = 80), $n_{a,frame}$

equals to appr. 2.03 million accesses to a *n* byte wide vector of pels per frame. With *n* = 16 for the horizontal size of the macroblocks and a frame rate of 25 Hz, the total required bandwidth for the reference frame memory is in the order of 812 million bytes/s. Assuming a 8 byte vector-organized data access, the final clock rate for the reference frame memory is less than 102 MHz. This clock rate can be achieved easily with today CMOS VLSI technology.

Figure 3 shows a block diagram of the proposed block matching architecture for serial search stripe data flow. The search frame is stored in the search frame memory SFM, the reference frame in the reference frame memory RFM. The search frame memory SFM is controlled by a control unit SFMC by supplying addresses Ad1, the reference frame memory REM is controlled by a control unit RFMC by supplying addresses Ad2. The current search area SA is loaded from the search frame memory SFM into the search area memory SAM. A control unit ATSC supplies addresses Ad3 to the search area memory SAM in order to convert the current search area into stripes. In steps of one picture element the stripes are piped through the k processing elements P0, P1, ..., Pk. The processing elements are arranged in serial order and are loaded with k macroblocks, beginning with $A_0,..., A_{k-1}$, in order to calculate the cost function. After processing the complete search area of a macroblock the motion vector is determined for this macroblock and this processed block is substituted by an unprocessed block and so on until all macroblocks of the current frame are processed.

Figure 4 shows a block diagram for a further embodiment with parallel search stripe data flow. Similar processing units are used, the only difference to the first embodiment shown in figure 3 is that the search stripes are supplied to the processing elemts in parallel order.

The invention can advantageously be used for encoding of MPEG video signals but also applies to video signal encoding by other bit-rate saving algorithms.

The invention can be implemented in any kind of digital recording devices like digital camcorders, DVD RAMs etc.

**Claims**

1.  Method for block motion estimation, in which a current frame is divided into blocks of picture elements which are compared with picture elements within the search area ($S_r$, $S_{rs}$, $S_{rst}$ $S_{st}$, $S_t$) of a reference frame and wherein thereof a motion information for the blocks is determined, **characterized in that**

    -   the search area is separated into search area stripes (St0, St1,...) with a width equal to the width of the blocks (n);
    -   the picture elements of k neighbouring blocks ($A_0$, ..., $A_{k-1}$) are compared with the picture elements of the search area stripes until the complete search area for a block ($A_0$) has been processed;
    -   the block ($A_0$), for which the complete search area has been processed, is substituted by an unprocessed block ($B_0$).

2.  Method according to claim 1, **wherein** the lines of the current frame are separated into block sections comprising k neighbouring blocks which are processed in parallel and wherein the horizontal width of the block sections is equal to the horizontal width ($W_h$) of the search area.

3.  Method according to claim 2, **wherein** in that the search area stripes have a vertical width equal to the vertical width ($W_v$) of the search area.

4.  Method according to any of claims 1 to 3, **wherein** the picture elements of the search area stripes are compared in parallel (Fig. 4) with the picture elements of the k neighbouring blocks ($A_0$, ..., $A_{k-1}$).

5.  Method according to any of claims 1 to 3, **wherein** the picture elements of the search area stripes are compared in serial (Fig. 3) with the picture elements of the k neighbouring blocks ($A_0$, ..., $A_{k-1}$).

6.  Method according to any of the preceding claims, **wherein** the block motion estimation is part of an MPEG encoding of video signals and the blocks are macroblocks with a horizontal and vertical macroblock size of 16 picture elements.

7.  Apparatus for image motion estimation for a method according to any of the preceding claims, **including:**

    -   first means (ATSC) for controlling the conversion of the search area into search stripes;
    -   k processing elements (P0, P1, ..., Pk) which are loaded with k neighbouring blocks for comparing with the picture elements of the search area stripes;
    -   means for substituting a block ($A_0$), for which the complete search area has been processed by an unproc-

essed block ($B_0$).

8.  Apparatus according to claim 7, **further comprising:**

    -   a search frame memory (SFM);
    -   a reference frame memory (RFM);
    -   second means (SFMC) for controlling the search frame memory (SFM);
    -   third means (RFMC) for controlling the reference frame memory (RFM);
    -   a search area memory (SAM), in which the current search area is loaded from the search frame memory (SFM).

9.  Apparatus according to claim 7 or 8, **wherein** the processing elements are arranged in serial order.

10. Apparatus according to claim 7 or 8, **wherein** the processing elements are arranged in parallel order.

**FIG. 1a**

**FIG. 1b**

FIG. 2a

FIG. 2b

**FIG. 3**

**FIG. 4**

## European Patent Office

# EUROPEAN SEARCH REPORT

Application Number

EP 99 11 0116

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 784 108 A (FREIZEIT AMIR ET AL) 21 July 1998 (1998-07-21) | 1,4,6-8, 10 | H04N7/26 |
| A | * column 4, line 40 - column 6, line 44 * | 2,3,5,9 | |
| X | ARTIERI A ET AL: "A CHIP SET CORE FOR IMAGE COMPRESSION" IEEE TRANSACTIONS ON CONSUMER ELECTRONICS, vol. 36, no. 3, 1 August 1990 (1990-08-01), pages 395-402, XP000162866 ISSN: 0098-3063 | 1 | |
| A | * the whole document * | 2-4,6-8, 10 | |
| A | DE SA L ET AL: "A PARALLEL ARCHITECTURE FOR REAL-TIME VIDEO CODING" MICROPROCESSING AND MICROPROGRAMMING, vol. 30, no. 1 / 05, 1 August 1990 (1990-08-01), pages 439-445, XP000141680 ISSN: 0165-6074 * abstract * * paragraph '0003! * | 1-4,6-8, 10 | |

TECHNICAL FIELDS SEARCHED (Int.Cl.7)

H04N

The present search report has been drawn up for all claims

| Place of search | Date of completion of the search | Examiner |
|---|---|---|
| THE HAGUE | 5 October 1999 | Marie-Julie, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 056 293 A1

## ANNEX TO THE EUROPEAN SEARCH REPORT
## ON EUROPEAN PATENT APPLICATION NO.

EP 99 11 0116

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-1999

| Patent document cited in search report | | Publication date | Patent family member(s) | | Publication date |
|---|---|---|---|---|---|
| US 5784108 | A | 21-07-1998 | AU | 5133298 A | 29-06-1998 |
| | | | EP | 0941608 A | 15-09-1999 |
| | | | WO | 9825408 A | 11-06-1998 |

EPO FORM P0459

For more details about this annex : see Official Journal of the European Patent Office, No. 12/82

12